# EUROPÄISCHE PATENTSCHRIFT

(11) **EP 3 449 718 B1**
(45) Veröffentlichungstag und Bekanntmachung des Hinweises auf die Patenterteilung: **12.05.2021**
(21) Anmeldenummer: 18191754.3
(22) Anmeldetag: 30.08.2018
(51) Int. Cl.: A01F 15/08

(54) **WIEGEEINRICHTUNG UND ERNTEBERGUNGSGERÄT**
WEIGHING DEVICE AND HARVESTING DEVICE
DISPOSITIF DE PESAGE ET APPAREIL DE RÉCUPERATION DE CUEILLETTE

(30) Priorität: 04.09.2017 DE 102017215438
(43) Veröffentlichungstag der Anmeldung: 06.03.2019
(60) Teilanmeldung: 21155030.6
(73) Patentinhaber: Deere & Company, Moline, IL 61265 (US)
(72) Erfinder: Beaufort, David M, 68163 Mannheim (DE); Blanchet, Maxime, 68163 Mannheim (DE)
(74) Vertreter: Reichert, Christian

(56) Entgegenhaltungen:
- EP-A1- 1 480 025
- EP-A1- 3 106 020

## Beschreibung

Die Erfindung betrifft ein Erntebergungsgerät.

Wiegeeinrichtungen zur Erfassung der Gewichtskraft eines Pressballens sind bekannt. Derartige Wiegeeinrichtungen sind komplex, erfordern zusätzliche Bauteile und/oder sind Umwelteinflüssen ausgesetzt bzw. müssen durch Schutzeinrichtungen vor Umwelteinflüssen geschützt werden. So zeigt die DE-A1-10241215 eine Rundbalfenpresse mit einer Wägeeinrichtung zur Erfassung der Gewichtskraft von gepressten Rundballen, die eingerichtet ist, die Kraft zu erfassen, die ein Rundballen auf ein sich im Pressraum der Rundballenpresse befindliches Auflageelement ausübt. Hierfür umfasst die Wägeeinrichtung eine zwischen dem Auflageelement und einem Rahmen der Rundballenpresse angeordnete Messzelle. Die EP 3 106 020 A1 offenbart eine Rundballenpresse mit einem Ballenpressraum, einer drehbar und bei der Erstellung des Ballens ansonsten im Wesentlichen unbeweglich am Gestell der Rundballenpresse abgestützten, direkt oder indirekt mit dem Ballen zusammenwirkenden Walze und einem Sensor zur Erfassung der Größe eines im Ballenpressraum entstehenden Ballens. Der Sensor ist konfiguriert, die Stützkraft zu erfassen, mit weicher sich die Walze am Rahmen abstützt.

Die der Erfindung zugrunde liegende Aufgabe wird darin gesehen, ein Erntebergungsgerät anzugeben, durch welches die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäss wird ein Erntebergungsgerät, insbesondere eine landwirtschaftliche oder industrielle Ballenpresse, vorzugsweise eine Presse zur Bildung rundzylindrischer Pressballen oder eine Umhüllungseinrichtung zur Umhüllung eines Pressballens mit einem Hüllmaterial, beispielsweise in der Art eines Netzes oder einer Folie, mit wenigstens einer Rolle zur Abstützung eines Pressballens vorgeschlagen. Das Erntebergungsgerät umfasst zumindest eine Wiegeeinrichtung zur Erfassung der Gewichtskraft eines Pressballens an einer Rolle und weist wenigstens ein Wiegemittel auf. Ist das Wiegemittel in eine Lagereinrichtung der Rolle integriert, ermöglicht dies eine kompakte Ausgestaltung. Das Wiegemittel ist einenends in einem mit einem Rahmen eines Erntebergungsgeräts verbindbaren Tragflansch drehfest aufgenommen, so dass eine sichere Verbindung des Wiegemittels mit dem Rahmen hergestellt werden kann, was zu einer stabilen Lagerung der Rolle beiträgt. Bei der Rolle kann es sich beispielsweise um eine Auflagerolle, eine Stützrolle und/oder auch eine Antriebsrolle handeln, die beispielsweise vorgesehen sein kann, den Pressballen auf
einem Erntebergungsgerät, beispielsweise einer Ballenpresse, insbesondere einer Ballenpresse zur Herstellung rundzylindrischer Ballen bzw. Pressballen, oder einer Umhüllungseinrichtung zur Umhüllung eines Pressballens mit einem Hüllmaterial, beispielsweise einem Netz oder einer Folie, oder einem Kombinationsgerät bestehend aus einer Ballenpresse und einer Umhüllungseinrichtung, wie sie beispielsweise im landwirtschaftlichen wie auch industriellen Bereich Verwendung finden, abzustützen, zu halten, zu bewegen und/oder anzutreiben. Der Pressballen kann dabei direkt in Kontakt mit der Rolle stehen oder aber indirekt mit dieser zusammenwirken, beispielsweise indem er auf einem/einer oder mehreren die Rolle oder zwei oder mehrere derartige Rollen umschlingenden Riemen und/oder Kette(n) aufliegt. Die Wiegeeinrichtung kann an einer oder mehreren Rollen vorgesehen sein bzw. mit einer bzw. mehreren Rollen zusammenwirken. Ebenso kann/können eine oder mehrere Lagereinrichtung(en) und/oder Wiegemittel vorgesehen sein.

Weist das Wiegemittel einen Lagerbolzen auf und/oder ist das Wiegemittel als ein Lagerbolzen ausgebildet, so trägt dies zu einer kompakten Ausgestaltung bei. Die Erfassung der Gewichtskraft des Pressballens kann auf diese Weise möglichst direkt an einem Bauteil, welches der Belastung durch die Gewichtskraft ausgesetzt ist, erfolgen. Vorzugsweise weist das Wiegemittel bzw. der Lagerbolzen hierzu wenigstens einen Sensor, insbesondere einen Hall-Sensor, auf bzw. es/er ist als ein solcher ausgebildet. Auch dies kann die Anzahl an Bauteilen reduzieren, eine kompakte Bauform und/oder eine direkte Gewichtskraftermittlung unterstützen. Alternativ zur Ausführung als Lagerbolzen ist es auch denkbar, dass das Wiegemittel eine Achse oder Welle aufweist und/oder als eine Achse oder Welle ausgeführt ist, welche vorzugsweise die Rolle trägt bzw. um die die Rolle drehbar angeordnet ist. Insbesondere die Verwendung und/oder Ausbildung als ein/in der Art eines Hall-Sensors vereinfacht eine Kombination einer Lagerungs- mit einer Mess- bzw. Sensorfunktion. Ein Hall-Sensor nutzt den Hall-Effekt zur Messung von Magnetfeldern. Der Hall-Sensor kann hierzu wenigstens einen Magneten aufweisen, der sich in Abhängigkeit von einem Belastungszustand des Wiegemittels bzw. des Lagerbolzens bewegt. Hierdurch kann sich die magnetische Flussdichte ändern, woraus ein elektrisches Signal resultieren kann, welches beispielsweise an eine Steuer- bzw. Regeleinrichtung übermittelt werden kann, um dort beispielsweise ausgewertet zu werden und/oder eine oder mehrere Funktion(en) des Erntebergungsgeräts entsprechend zu steuern bzw. zu regeln.

Zusätzlich oder alternativ kann sich das Wiegemittel von dem Tragflansch in ein hohles Innere der Rolle hinein erstrecken und vorzugsweise im Inneren der Rolle von einem die Rolle abstützenden Lager aufgenommen werden. Das Wiegemittel ist somit im Inneren der Rolle aufgenommen bzw. gelagert, wodurch es bzw. seine Lagerung durch die Rolle bzw. einen Hohlzylinder der Rolle vor Umwelteinflüssen, wie beispielsweise Feuchtigkeit, Staub oder Erntegut, geschützt wird.

Es ist denkbar, die Rolle fest zu lagern. Insbesondere zur Aufnahme und/oder zum Antreiben eines insbesondere rotierenden Pressballens oder auch um sich an einen Umfang des Pressballens anzupassen, kann die Rolle aber um die Lagereinrichtung und/oder das Wiegemittel drehbar vorgesehen sein.

In manchen Anwendungsfällen kann es günstig sein, eine Hülse vorzusehen, die vorzugsweise zusammen mit dem Wiegemittel von dem Tragflansch drehfest aufgenommen wird, und durch die sich das Wiegemittel erstrecken kann.

Eine Überlastsicherung kann dazu beitragen, das Wiegemittel bzw. den Lagerbolzen vor zu starken Belastungen, wie sie beispielsweise durch besonders schwere Pressballen hervorgerufen werden können, zu schützen. Eine solche Überlastsicherung kann insbesondere derart ausgebildet sein, dass sie die Rolle im Falle einer Überlast zumindest zeitweise und/oder bereichsweise insbesondere kraftschlüssig mit dem Tragflansch verbindet, so dass von dem Wiegemittel bzw. dem Lagerbolzen keine oder nur noch ein Teil der Belastung aufgenommen wird.

Hierfür kann zwischen Lagerbolzen und Hülse, ein Spalt vorgesehen sein, der im Fall einer Überlast derart reduziert wird, dass das Wiegemittel insbesondere kraftschlüssig an der Hülse zur Anlage kommt. Dies kann insbesondere in Anwendungsfällen günstig sein, in denen ein Drehen der Rolle auch im Falle einer Überlast zumindest im Wesentlichen frei möglich sein soll, beispielsweise bei einer Rolle in oder an einem Pressraum einer Ballenpresse. Alternativ oder zusätzlich kann zwischen der Rolle und dem Tragflansch ein Spalt vorgesehen sein, der im Falle einer Überlast derart reduziert wird, dass die Rolle direkt oder indirekt insbesondere kraftschlüssig an dem Tragflansch zur Anlage kommt. Eine derartige Ausgestaltung kann günstig sein, wenn ein Drehen der Rolle im Überlastfall nicht sicherzustellen ist, beispielsweise weil dies eine Funktion des Erntebergungsgeräts nicht oder nur geringfügig einschränkt.

Insbesondere ist die Rolle geeignet zur Abstützung eines Pressballens, insbesondere in oder an einem Erntebergungsgerät.

Eine derartige Wiegeeinrichtung kann an einem Erntebergungsgerät, insbesondere einer landwirtschaftlichen oder industriellen Ballenpresse vorzugsweise einer Presse zur Bildung rundzylindrischer Pressballen oder einer Umhüllungseinrichtung zur Umhüllung eines Pressballens mit einem Hüllmaterial, beispielsweise in der Art eines Netzes oder einer Folie, mit wenigstens einer Rolle zur Abstützung eines Ballens, eingesetzt werden. Ein derartiges Erntebergungsgerät kann eine oder auch mehrere Wiegeeinrichtung(en) aufweisen. Es kann vorgesehen sein, dass die Wiegeeinrichtung im Pressraum einer Ballenpresse oder an einen solchen angrenzend vorgesehen ist. Es kann aber auch vorgesehen sein, dass die Wiegeeinrichtung ausgebildet ist, die Gewichtskraft eines auf einer Umhüllungseinrichtung aufgenommen Pressballens zu ermitteln. Die Wiegeeinrichtung kann hierzu beispielsweise an oder angrenzend an eine(r) Aufnahmevorrichtung angeordnet sein oder auch an eine Transportvorrichtung zur Überführung eines Pressballens aus einer ersten Position, beispielsweise an einem Pressraum einer Ballenpresse, in eine zweite Position, beispielsweise auf oder in einer Umhüllungseinrichtung. Im Falle eines einen Pressraum und eine Umhüllungseinrichtung aufweisenden Kombinationsgerät ist es denkbar, dass sowohl in bzw. an dem Pressraum und in bzw. an der Umhüllungseinrichtung eine Wiegeeinrichtung vorgesehen ist. Es kann aber auch vorgesehen sein, dass entweder in bzw. an dem Pressraum oder in bzw. an der Umhüllungseinrichtung eine Wiegeeinrichtung vorgesehen ist. Bei dem Pressballen, kann es sich insbesondere um einen Ballen aus Erntegut handeln. Es ist aber auch denkbar, dass sich der Pressballen aus Müll, Papier, Stoff bzw. Gewebe, Baumwolle, Tabak etc. zusammensetzt.

Besonders günstig ist es, wenn sich der Pressballen zum Zeitpunkt der Erfassung einer Gewichtskraft des Pressballens zumindest näherungsweise ausschließlich auf der Rolle abstützt.

Anhand der Zeichnung, die drei Ausführungsbeispiele der Erfindung zeigt, werden nachfolgend die Erfindung sowie weitere Vorteile und vorteilhafte Weiterbildungen der Erfindung und Ausgestaltungen der Erfindung näher beschrieben und erläutert.

### Es zeigt:

- Fig. 1: eine schematische Seitenansicht eines in der Art einer Ballenpresse mit einer Umhüllungseinrichtung ausgebildeten Erntebergungsgeräts,
- Fig. 2: eine vergrößerte Darstellung einer Rolle einer Aufnahmeeinrichtung der Umhüllungseinrichtung,
- Fig. 2a: eine vergrößerte Darstellung des Bereichs A aus Figur 2,
- Fig. 3: eine zweite Ausführungsform eines Erntebergungsgeräts, welches alternativ als Ballenpresse mit einem Pressraum unveränderlicher Größe ausgebildet ist,
- Fig. 4: eine Darstellung einer in dem Pressraum eines in Figur 3 gezeigten Erntebergungsgeräts angeordneten Rolle und
- Fig. 5: ein Erntebergungsgerät in einer dritten Ausführungsform, das als eine Ballenpresse mit variablem Pressraum ausgebildet ist.

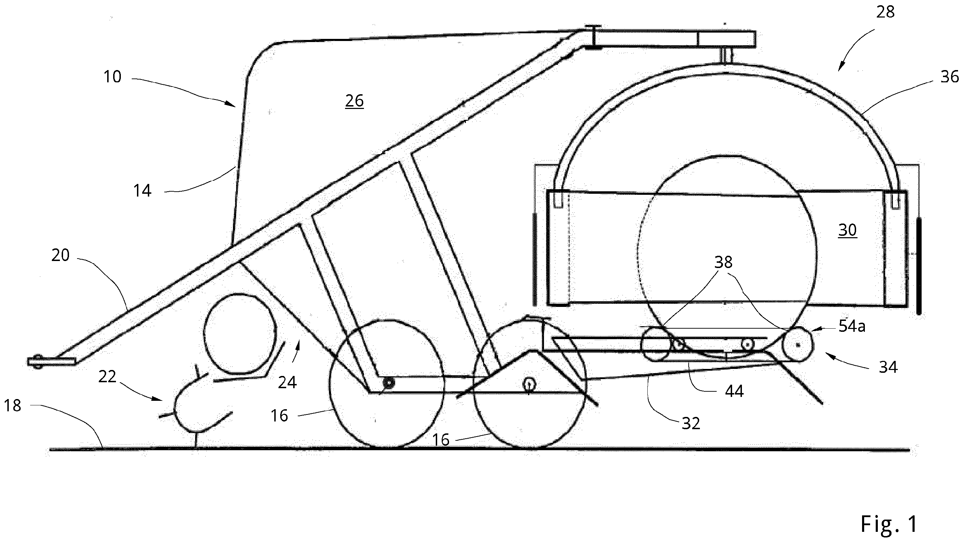

In der Figur 1 wird ein Erntebergungsgerät 10 in der Art einer landwirtschaftlichen Ballenpresse zum Pressen eines rundzylindrischen Pressballens 12 gezeigt, welche einen Rahmen 14 aufweist, der sich mittels Rädern 16 auf einem Untergrund 18 abstützt und das mittels einer Deichsel 20 an ein nicht gezeigtes Zugfahrzeug, z. B. einen Ackerschlepper, anschließbar ist.

An einer bezogen auf eine Vorwärtsfahrtrichtung vorderen, unteren Seite des Rahmens 14 befindet sich in bekannter Weise eine Aufnahmevorrichtung 22 zur Aufnahme und Zufuhr von Erntegut, die geschnittenes Erntegut über einen Einlass 24 in einen Pressraum 26 fördert.

Zusätzlich weist das Erntebergungsgerät 10 eine Umhüllungseinrichtung 28 zur Umhüllung eines in der Ballenpresse gebildeten Pressballens 12 mit einem Hüllmaterial 30, beispielsweise einer Folie, auf. Die Umhüllungseinrichtung 28 weist einen Rahmen 32, einen Wickeltisch bzw. eine Aufnahmevorrichtung 34, zur Aufnahme des zu umhüllenden Ballens 16 sowie Wickelarme 36, die zur Umhüllung des Pressballens 12 mit dem Hüllmaterial 30 mittels eines nicht gezeigten, geeigneten Antriebs in Bewegung versetzt werden können, auf.

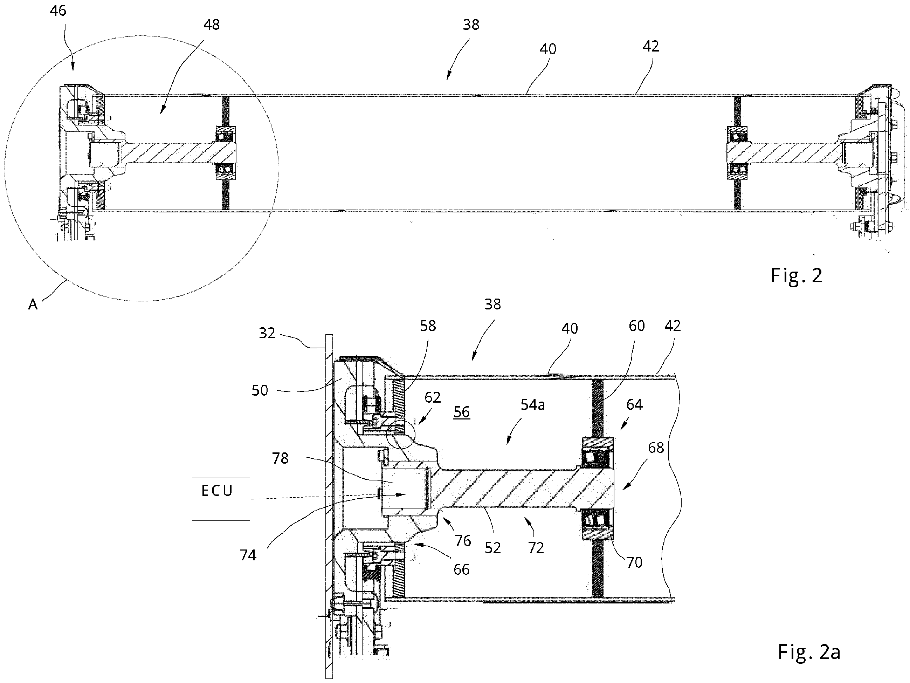

Die Aufnahmevorrichtung 34 wiederum weist zwei Rollen 38 auf, von denen eine in der Figur 2 vergrößert dargestellt wird, welche den Pressballen 12 während eines Überführens des Pressballens 12 von dem Pressraum 26 in seine Umhüllungsposition auf der Umhüllungseinrichtung 28 und/oder während der Umhüllung des Ballens 12 mit Hüllmaterial 30 abstützen bzw. hierzu mit einem um die Rollen 38 bzw. um einen eine Mantelfläche 40 der Rollen 38 zumindest im Wesentlichen bestimmenden Hohlzylinder 42 geschlungenen Riemen 44 zusammenwirken. Der Hohlzylinder 42 kann in bekannter Art aus einem metallischen Werkstoff, beispielsweise in der Art eines Blechs, oder aus einem anderen geeigneten Material, beispielsweise einem Kunststoff, gefertigt sein.

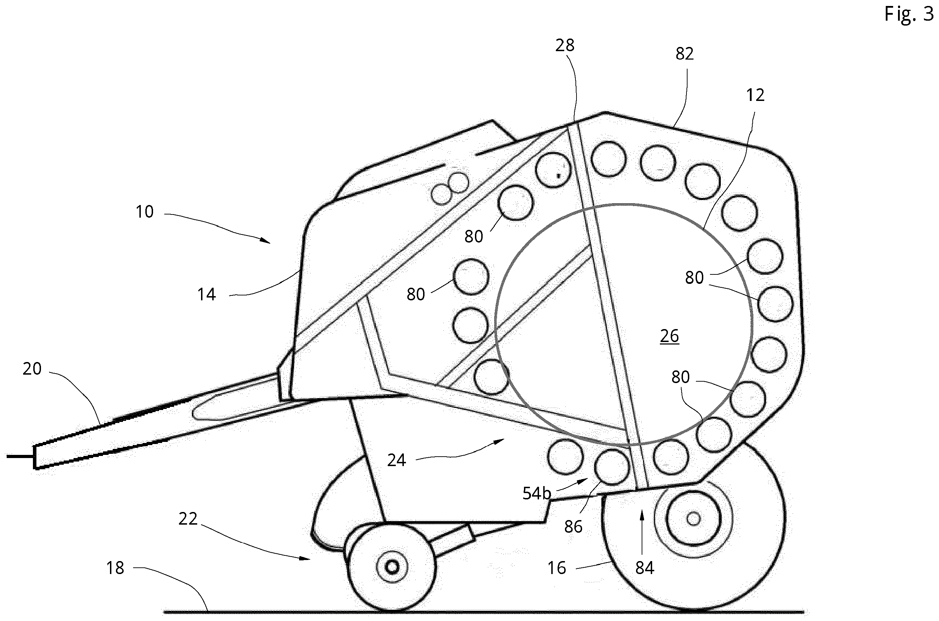

Es wird nun auch auf die Figur 2a Bezug genommen, in der ein in der Figur 3 mit A bezeichneter, linksseitiger Bereich einer der Rollen 38 vergrößert dargestellt wird. Im Folgenden wird nur auf diesen Bereich Bezug genommen, wobei ein rechtsseitiger, in Figur 2 ebenfalls gezeigter Bereich gemäß dem vorliegenden Ausführungsbeispiel entsprechend ausgebildet ist. Gemäß der Darstellung ist die Rolle 38 in ihrem linksseitigen Endbereich 46 über eine Lagereinrichtung 48 mit einem Tragflansch 50 und einem Lagerbolzen 52 an dem Rahmen 32 der Umhüllungseinrichtung 28 angebracht. Die Lagereinrichtung 48 weist darüber hinaus eine Wiegeneinrichtung 54a auf, wie sie im Folgenden genauer beschrieben wird. Gemäß dem gezeigten Ausführungsbeispiel ist auch in dem rechtsseitigen Bereich eine Wiegeeinrichtung 54a vorgesehen, wie auch die zweite Rolle 38 entsprechend ausgebildet ist. Es ist aber durchaus denkbar, dass nur eine der Rollen 38 einerseits oder beiderseits mit einer Wiegeeinrichtung 54a zusammen wirkt.

Im Inneren 56 des Hohlyzlinders 42 sind zwei jeweils im Wesentlichen scheibenförmige Stege 58, 60 mit jeweils einer zentralen kreisförmigen Öffnung 62, 64 mit dem Hohlzylinder 42 fest verbunden, wobei der in dem Endbereich 46 der Rolle 38 bzw. des Hohlzylinders 42 angeordnete Steg im Folgenden als Begrenzungssteg 58 und der bezogen auf den Begrenzungssteg 58 weiter im Inneren 56 des Hohlzylinders 46 angeordnete Steg als Lagersteg 60 bezeichnet wird.

Der in dem Tragflansch 50 drehfest aufgenommene Lagerbolzen 52 erstreckt sich von dem Tragflansch 50 in das Innere 56 des Hohlzylinders 42. Der Tragflansch 50 wiederum erstreckt sich durch die Öffnung 62 in dem Begrenzungssteg 58 derart, dass zwischen dem Lagerbolzen 52 und dem Begrenzungssteg 58 zumindest dann ein Spalt 66 vorgesehen ist, wenn durch die Rollen 38 kein Pressballen 12 aufgenommen wird. Ein dem Tragflansch 50 gegenüberliegender Endbereich 68 des Lagerbolzens 52 trägt ein Lager 70 in der Art eines Wälz- bzw. Kugellagers, das von der Öffnung 64 in dem Lagersteg 60 derart aufgenommen wird, dass der Hohlzylinder 42 bzw. die Rolle 38 um den Lagerbolzen 52 drehen kann und sich die Rolle 38 über das Lager 70 auf dem Lagerbolzen 52 abstützt.

Zur Bestimmung der Gewichtskraft eines durch die Rolle 38 bzw. durch den um diese geschlungenen Riemen 44 aufgenommenen bzw. abgestützten Pressballens 12 ist der Lagerbolzen 52 als ein Wiegemittel 72 ausgebildet, welches geeignet ist, eine auf den Lagerbolzen 52 wirkende Gewichtskraft bzw. Last zu ermitteln. Hierzu weist der Lagerbolzen 52 einen Sensor 74 auf, der vorzugsweise in der Art eines bekannten Hall-Sensors ausgebildet. In einem Kopfbereich 76 des Lagerbolzens 52 ist ein Aufnehmer 78 vorgesehen, der von dem Sensor 70 aufgenommene Werte an eine nur andeutungsweise dargestellte Steuer- bzw. Regelungseinrichtung (ECU) übermittelt.

Im normalen Betrieb wird die Gewichtskraft eines sich auf den Rollen 40 direkt oder indirekt abstützenden Pressballens 12 über die Hohlzylinder 42, die Lagerstege 60 und die Lager 70 aufgenommen, um die die Rollen 38 drehen. Die Lager 70 übertragen die wirkenden Kräfte wiederum auf den Lagerbolzen 52, wo der oder die Sensoren 74 die entsprechende Belastung ermitteln. Die Begrenzungsstege 58 stehen nicht in Kontakt mit dem Lagerbolzen 52. Tritt nun eine Überlastsituation auf, beispielsweise dadurch, dass der abzustützende Pressballen 12 eine zulässige Gewichtskraft übersteigt, was beispielsweise im Falle sehr feuchten Ernteguts auftreten kann, so verformt sich der Lagerbolzen 52 derart, dass er letztlich teilweise oder vollständig zur Anlage mit dem Begrenzungssteg 58 kommt. Dadurch wird die Gewichtskraft nicht länger vollständig von dem bzw. den Lagerbolzen 52 getragen, sondern zumindest teilweise über den bzw. die Begrenzungsstege 58 an den Tragflansch 50 übertragen. Liegt der Lagerbolzen 52 an dem Tragflansch 50 an, so wird eine Rotation der Rolle 38 begrenzt und gegebenenfalls unterbunden.

In der Figur 3 der Zeichnung wird nun eine zweite Ausführungsform eines Erntebergungsgeräts 10 in der Art einer Presse zur Bildung rundzylindrischer Pressballen gezeigt. Soweit möglich kommen auch in diesem Ausführungsbeispiel zur Vereinfachung die gleichen Referenzzeichen für Bauteile gleicher oder zumindest vergleichbarer Funktion bzw. Ausbildung zur Anwendung. Das Erntebergungsgerät 10 weist einen Rahmen 14 auf, der sich mittels Rädern 16 auf einem Untergrund 18 abstützt und ist mittels einer Deichsel 20 an ein nicht gezeigtes Zugfahrzeug, z. B. einen Ackerschlepper, anschließbar.

Der Pressraum 26 der Ballenpresse 10 ist größenunveränderlich ausgebildet und die Presse 10 weist eine Vielzahl zueinander parallel verlaufender Pressrollen 80 (exemplarisch wurden hier nur einige wenige Rollen 80 mit dem Bezugszeichen 80 versehen), die während der Bildung eines Pressballens 12 auf einem Kreisbogen gelegen sind, und von denen wenigstens einige angetrieben sind. Die Pressrollen 80 dienen neben einem Pressen und einer Formgebung, insbesondere auch einer Rotationserzeugung oder einer Rotationserhaltung des in dem Pressraum 26 angeordneten Pressballens 12. In einem bezogen auf die Vorwärtsfahrtrichtung rückwärtigen Bereich des Erntebergungsgeräts 10 ist darüber hinaus eine verschwenkbare Auswurfklappe 82 vorgesehen, die zum Auswerfen eines Pressballens 12 aus dem Pressraum 26 eine Öffnung 84 freigeben kann. Zur Verdeutlichung wird die Auswurfklappe 82 in der Zeichnung in einer leicht geöffneten Stellung gezeigt.

Eine bezogen auf den Pressraum 26 an der tiefsten Stelle bzw. bezogen auf die Vorwärtsfahrtrichtung vor der Öffnung 82 angeordnete Pressrollen 80, auf der sich der Pressballen 12 zumeist und zumindest zum Zeitpunkt der Gewichtskraftermittlung zumindest näherungsweise ausschließlich abstützt und die im folgenden zur Verdeutlichung als Rolle 86 bezeichnet wird, wirkt darüber hinaus mit einer Wiegeeinrichtung 54b zusammen.

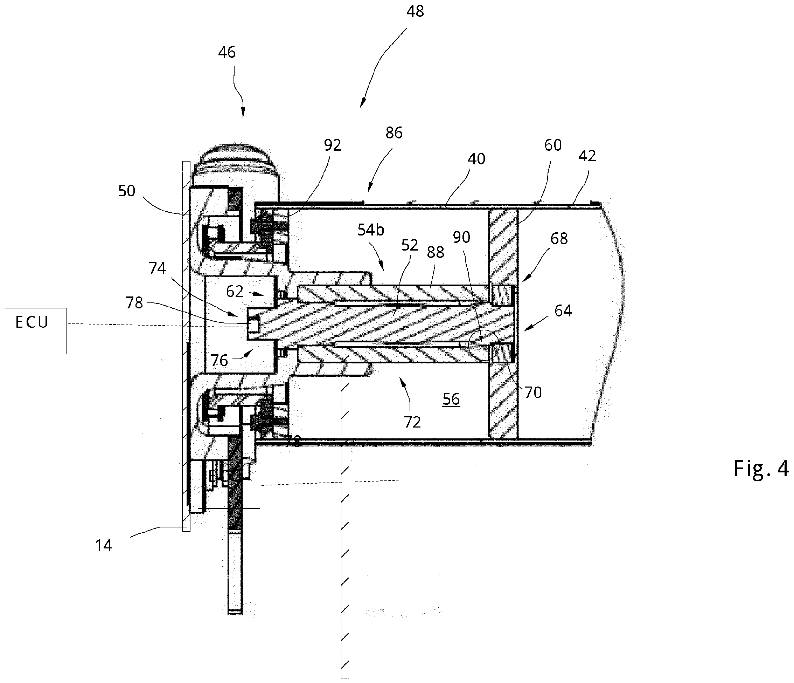

Es wird nun auch auf die Figur 4 Bezug genommen, die eine Rolle 86 in einer Darstellung gemäß der Darstellung aus Fig. 2b zeigt, wobei entsprechende Bauteile mit den gleichen Referenzzeichen wie im vorherigen Ausführungsbeispiel benannt werden. Die Rolle 86 weist einen Hohlzylinder 42 mit einem innenliegenden, fest mit dem Hohlzylinder 42 verbundenen Lagersteg 60 auf, der sich drehbar auf einem Lager 70 abstützt. Darüber hinaus ist ein Tragflansch 50 vorgesehen, der mit dem Rahmen 14 der Presse verbunden ist und der einen Lagerbolzen 52 drehfest aufnimmt. An seinem dem Tragflansch 50 gegenüberliegenden Endbereich 68 ist der Lagerbolzen 52 drehbar über das Lager 70 in dem Lagersteg 60 aufgenommen. Es wird wiederum nur der linksseitige Bereich der Rolle 86 gezeigt und beschrieben, wobei der rechtsseitige Bereich der Rolle 86 entsprechend ausgebildet ist. Es ist aber durchaus denkbar, dass nur in einem Bereich ein als Wiegemittel 72 ausgebildeter Lagerbolzen 52 vorgesehen ist.

Darüber hinaus ist gemäß diesem zweiten Ausführungsbeispiel eine Hülse 88 vorgesehen, die den Lagerbolzen 52 aufnimmt bzw. umgibt und die einenends zusammen mit dem Lagerbolzen 52 von dem Tragflansch 50 drehfest aufgenommen wird. Anderenends reicht die Hülse 88 an den Lagersteg 60 bzw. die Öffnung 64 in dem Lagersteg 60 heran. Zwischen dem Lagerbolzen 52 und der Hülse 88 ist zumindest dann ein Spalt 90 vorgesehen, wenn durch die Rollen 38 kein Pressballen 12 aufgenommen wird. An dem Tragflansch 50 sind darüber hinaus Dichtmittel 92 vorgesehen, die ein Eindringen von Fremdkörpern und/oder Feuchtigkeit in das Innere 56 des Hohlzylinders 42 verhindern, die Rolle 38 bzw. den Hohlzylinder 42 aber zumindest im Wesentlichen nicht abstützen.

Im normalen Betrieb wird die Gewichtskraft eines sich auf den Rollen 38 abstützenden Pressballens 12 über den Hohlzylinder 42, die Lagerstege 60 und die Lager 70 aufgenommen, um die die Rolle 86 dreht. Die Lager 70 übertragen die wirkenden Kräfte wiederum auf den Lagerbolzen 52, wo der Sensor 74 eine entsprechende Verformung, respektive Belastung des Lagerbolzens 52 ermittelt. Die Hülse 88 steht nicht in Kontakt mit dem Endbereich 68 des Lagerbolzen 52. Tritt nun eine Überlastsituation auf, beispielsweise dadurch, dass der abzustützende Pressballen 12 eine zulässige Dynamik übersteigt, so verformt sich der Lagerbolzen 52 derart, dass er bzw. sein Endbereich 68 letztlich zur Anlage mit der Hülse 88 kommt. Dadurch wird die Gewichtskraft nicht länger vollständig von dem Lagerbolzen 52 aufgenommen bzw. abgestützt, sondern zumindest teilweise über die Hülse 88 an den Tragflansch 50 übertragen. Eine zumindest im Wesentlichen unbehinderte Rotation der Rolle 78 ist hier auch dann möglich, wenn der Lagerbolzen 52 und die Hülse 88 sich in Anlage befinden.

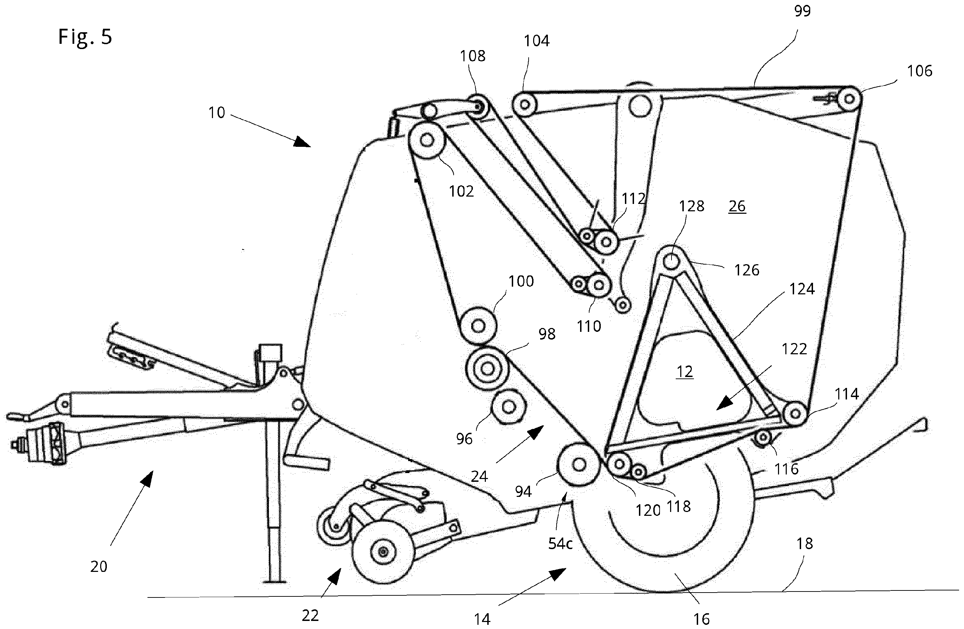

In der Fig. 5 ist eine dritte Ausführungsform eines Erntebergungsgeräts 10 dargestellt, wobei soweit mögliche bzw. angebracht den in den vorhergehenden Figuren entsprechende Referenzzeichen verwendet werden. Das Erntebergungsgerät 10 weist auch hier einen Rahmen 14 auf, der sich mittels Rädern 16 auf dem Untergrund 18 abstützt. Das gezeigte Erntebergungsgerät 10 ist in der Art einer Rundballenpresse mit einem variablen Pressraum 26 ausgebildet

Es ist eine Deichsel 20 vorgesehen, um das Erntebergungsgerät 10 an einem nicht gezeigten Ackerschlepper anhängen und über ein Feld ziehen zu können. Eine Aufnahmevorrichtung 22 in Form einer Pick-Up dient zur Aufnahme von auf dem Untergrund 16 liegenden Erntegut, z. B. von in einem Schwad abgelegten Heu oder Stroh. Das von der Aufnahmevorrichtung 22 aufgenommene Erntegut wird über einen Einlass 24 einem Pressraums 26 zugeführt und dort spiralförmig zu einem rundzylindrischen Pressballen 12 aufgerollt, gebunden und anschließend auf dem Untergrund 16 abgelegt.

Am Einlass 24 des Pressraums 26 sind eine untere, stationäre Rolle 94 und zwei obere Rollen 96, 98 positioniert. Der Pressraum 26 wird weiterhin durch ein endloses Pressmittel bzw. einen Riemen 99 gebildet, der gemäß der vorliegenden Ausführungsform in der Art zweier nebeneinander anliegender Pressriemen ausgeführt ist und um eine Anzahl von ortsfesten Walzen 100, 102, 104, 106 und bewegbaren Walzen 108 , 110, 112, 114, 116, 118, 120 geführt wird.

Vier Walzen 114 - 120 der bewegbaren Walzen 108 - 120 sind in einem unteren Bereich 122 eines deltaförmigen Trägers 124 frei drehbar gelagert, der um seine obere Spitze 126 um eine horizontal und quer zur Vorwärtsrichtung verlaufende Achse 128 schwenkbar angelenkt ist und mit einem Aktor (nicht gezeigt) aus der in Fig. 5 dargestellten Ballenbildungsposition in eine nach hinten und oben verschwenkte Ballenauswurfposition verbringbar ist.

An der unteren, stationären Rolle 94, auf der sich ein Pressballen 12 zumindest zeitweise näherungsweise ausschließlich abstützt, ist eine Wiegeeinrichtung 54c vorgesehen, welche entsprechend der in Figur 4 gezeigten Wiegeeinrichtung 54b ausgebildet ist.

## Patentansprüche

1. Erntebergungsgerät, insbesondere eine landwirtschaftliche oder industrielle Ballenpresse, vorzugsweise eine Presse zur Bildung rundzylindrischer Pressballen (12) oder eine Umhüllungseinrichtung (28) zur Umhüllung eines Pressballens (12) mit einem Hüllmaterial (30), beispielsweise in der Art eines Netzes oder einer Folie, mit wenigstens einer Rolle (38, 86, 94) zur Abstützung eines Pressballens (12), und zumindest einer Wiegeeinrichtung (54a, 54b, 54c) zur Erfassung der Gewichtskraft des Pressballens (12) an der Rolle (38, 86, 94), mit wenigstens einem Wiegemittel (72), wobei das Wiegemittel (72) in eine Lagereinrichtung (48) der Rolle (38, 86, 94) integriert ist,
**dadurch gekennzeichnet, dass**
das Wiegemittel (72) einenends in einem mit einem Rahmen (14, 30) des Erntebergungsgeräts (10) verbundenen Tragflansch (50) drehfest aufgenommen ist.

2. Erntebergungsgerät nach Anspruch 1, **dadurch gekennzeichnet, dass** das Wiegemittel (72) einen Lagerbolzen (52) aufweist und/oder als ein solcher ausgebildet ist und/oder das Wiegemittel (72) bzw. der Lagerbolzen (52) wenigstens einen Sensor (74) aufweist, der insbesondere ein Hall-Sensor ist.

3. Erntebergungsgerät nach Anspruch 1 oder 2, **dadurch gekennzeichnet, dass** sich das Wiegemittel (72) von dem Tragflansch (50) in ein hohles Inneres (56) der Rolle (38, 86, 94) hinein erstreckt und vorzugsweise im Inneren (56) der Rolle (38, 86, 94) von einem die Rolle (38, 96, 94) abstützenden Lager (70) aufgenommen wird.

4. Erntebergungsgerät nach einem der vorherigen Ansprüche, **dadurch gekennzeichnet, dass** die Rolle (38, 96, 94) um die Lagereinrichtung (48) und/oder das Wiegemittel (72) drehbar vorgesehen ist.

5. Erntebergungsgerät nach einem der vorherigen Ansprüche, **dadurch gekennzeichnet, dass** eine Hülse (88) vorgesehen ist, die zusammen mit dem Wiegemittel (72) von dem Tragflansch (50) drehfest aufgenommen wird, und durch die sich das Wiegemittel (72) erstreckt.

6. Erntebergungsgerät nach einem Ansprüche 3 bis 5, **dadurch gekennzeichnet, dass** Mittel vorgesehen sind, die die Rolle (38, 96, 94) zumindest im Falle einer Überlast direkt oder indirekt zumindest zeitweise und/oder bereichsweise insbesondere kraftschlüssig mit dem Tragflansch (50) verbinden.

7. Erntebergungsgerät nach Anspruch 6, **dadurch gekennzeichnet, dass** zwischen dem Lagerbolzen (52) und der Hülse (88), ein Spalt (90) vorgesehen ist, der im Fall einer Überlast derart reduziert wird, dass das Wiegemittel (72) insbesondere kraftschlüssig an der Hülse (88) zur Anlage kommt, oder dass zwischen der Rolle (38, 86, 94) und dem Tragflansch (50) ein Spalt (66) vorgesehen ist, der im Falle einer Überlast derart reduziert wird, dass die Rolle (38, 86, 94) direkt oder indirekt insbesondere kraftschlüssig an dem Tragflansch (50) zur Anlage kommt.

8. Erntebergungsgerät nach einem der vorherigen Ansprüche, **dadurch gekennzeichnet, dass** die Rolle (38, 86, 94) zur Abstützung eines Pressballens (12) in oder an einem Erntebergungsgerät (10) geeignet ist.

9. Erntebergungsgerät nach einem der vorherigen Ansprüche, **dadurch gekennzeichnet, dass** sich der Pressballen (12) zumindest zum Zeitpunkt der Erfassung einer Gewichtskraft des Pressballens (12) zumindest näherungsweise ausschließlich auf der Rolle (38, 86, 94) abstützt.

## Claims

1. Harvesting appliance, in particular an agricultural or industrial baler, preferably a press for forming round cylindrical pressed bales (12) or a wrapping device (28) for wrapping a pressed bale (12) with an enveloping material (30), for example of the net or film type, having at least one roller (38, 86, 94) for supporting a pressed bale (12), and at least one weighing device (54a, 54b, 54c) for detecting the weight force of a pressed bale (12) on the roller (38, 86, 94), having at least one weighing means (72), wherein the weighing means (72) is integrated into a bearing device (48) of the roller (38, 86, 94),
**characterized in that**
the weighing means (72) is received at one end in a rotationally fixed manner in a supporting flange (50) connected to a frame (14, 30) of the harvesting appliance (10).

2. Harvesting appliance according to Claim 1, **characterized in that** the weighing means (72) has a bearing pin (52) and/or is configured as such, and/or the weighing means (72), or the bearing pin (52), has at least one sensor (74), which is in particular a Hall sensor.

3. Harvesting appliance according to Claim 1 or 2, **characterized in that** the weighing means (72) extends from the supporting flange (50) into a hollow interior (56) of the roller (38, 86, 94) and is received preferably in the interior (56) of the roller (38, 86, 94) by a bearing (70) supporting the roller (38, 96, 94).

4. Harvesting appliance according to one of the preceding claims, **characterized in that** the roller (38, 96, 94) is provided to be rotatable about the bearing device (48) and/or the weighing means (72).

5. Harvesting appliance according to one of the preceding claims, **characterized in that** a sleeve (88) is provided, which, together with the weighing means (72), is received in a rotationally fixed manner by the supporting flange (50), and through which the weighing means (72) extends.

6. Harvesting appliance according to one of Claims 3 to 5, **characterized in that** means are provided which, at least in the case of an overload, connect the roller (38, 96, 94) directly or indirectly to the supporting flange (50) at least temporarily and/or regionally, in particular in a force-fitting manner.

7. Harvesting appliance according to Claim 6, **characterized in that**, between the bearing pin (52) and the sleeve (88), a gap (90) is provided, which is reduced in the event of an overload such that the weighing means (72) comes to bear in particular in a force-fitting manner on the sleeve (88), or **in that**, between the roller (38, 86, 94) and the supporting flange (50), a gap (66) is provided, which is reduced in the event of an overload such that the roller (38, 86, 94) comes to bear directly or indirectly on the supporting flange (50), in particular in a force-fitting manner.

8. Harvesting appliance according to one of the preceding claims, **characterized in that** the roller (38, 86, 94) is suitable for supporting a pressed bale (12) in or on a harvesting appliance (10).

9. Harvesting appliance according to one of the preceding claims, **characterized in that** the pressed bale (12) is supported at least approximately only on the roller (38, 86, 94) at least at the time at which the weight force of the pressed bale (12) is sensed.

## Revendications

1. Appareil de collecte de récolte, en particulier une presse à balles agricole ou industrielle, de préférence une presse pour former des balles pressées cylindriques rondes (12) ou un dispositif d'enveloppage (28) pour envelopper une balle pressée (12) dans un matériau d'enveloppe (30), par exemple sous la forme d'un filet ou d'un film, comprenant au moins un rouleau (38, 86, 94) pour soutenir une balle pressée (12), et au moins un dispositif de pesage (54a, 54b, 54c) pour détecter le poids de la balle pressée (12) sur le rouleau (38, 86, 94), comprenant au moins un moyen de pesage (72), le moyen de pesage (72) étant intégré dans un dispositif de palier (48) du rouleau (38, 86, 94),
**caractérisé en ce que** le moyen de pesage (72) est reçu de manière solidaire en rotation à une extrémité dans une bride de support (50) reliée à un cadre (14, 30) de l'appareil de collecte de récolte (10).

2. Appareil de collecte de récolte selon la revendication 1, **caractérisé en ce que** le moyen de pesage (72) présente un axe de palier (52) et/ou est réalisé comme tel, et/ou le moyen de pesage (72) ou l'axe de palier (52) présente au moins un capteur (74) qui est en particulier un capteur à effet Hall.

3. Appareil de collecte de récolte selon la revendication 1 ou 2, **caractérisé en ce que** le moyen de pesage (72) s'étend de la bride de support (50) dans un intérieur creux (56) du rouleau (38, 86, 94) et est reçu de préférence à l'intérieur (56) du rouleau (38, 86, 94) par un palier (70) soutenant le rouleau (38, 96, 94).

4. Appareil de collecte de récolte selon l'une quelconque des revendications précédentes, **caractérisé en ce que** le rouleau (38, 96, 94) est prévu pour être rotatif autour du dispositif de palier (48) et/ou du moyen de pesage (72).

5. Appareil de collecte de récolte selon l'une quelconque des revendications précédentes, **caractérisé en ce qu'**une douille (88) est prévue qui est reçue de manière solidaire en rotation par la bride de support (50) conjointement avec le moyen de pesage (72), et à travers laquelle s'étend le moyen de pesage (72).

6. Appareil de collecte de récolte selon l'une quelconque des revendications 3 à 5, **caractérisé en ce que** des moyens sont prévus qui relient le rouleau (38, 96, 94) à la bride de support (50), au moins en cas de surcharge directement ou indirectement au moins provisoirement et/ou par endroits, en particulier par adhérence.

7. Appareil de collecte de récolte selon la revendication 6, **caractérisé en ce qu'**entre l'axe de palier (52) et la douille (88), un intervalle (90) est prévu qui est réduit en cas de surcharge de telle sorte que le moyen de pesage (72) vient en butée contre la douille (88), en particulier par adhérence, ou **en ce qu'**entre le rouleau (38, 86, 94) et la bride de support (50), un intervalle (66) est prévu qui est réduit en cas de surcharge de telle sorte que le rouleau (38, 86, 94) vient en butée directement ou indirectement, en particulier par adhérence, contre la bride de support (50).

8. Appareil de collecte de récolte selon l'une quelconque des revendications précédentes, **caractérisé en ce que** le rouleau (38, 86, 94) est adapté pour soutenir une balle pressée (12) dans ou sur un appareil de collecte de récolte (10).

9. Appareil de collecte de récolte selon l'une quelconque des revendications précédentes, **caractérisé en ce que** la balle pressée (12) s'appuie au moins au moment de la détection d'un poids de la balle pressée (12) au moins presque exclusivement sur le rouleau (38, 86, 94).
